# EUROPEAN PATENT SPECIFICATION

(11) **EP 3 267 678 B1**
(45) Date of publication and mention of the grant of the patent: **05.10.2022**
(21) Application number: 17159053.2
(22) Date of filing: 03.03.2017
(51) Int. Cl.: H04N 5/3745

(54) **PIXEL ACQUISITION CIRCUIT, IMAGE SENSOR AND IMAGE ACQUISITION SYSTEM**
PIXELERFASSUNGSSCHALTUNG, BILDSENSOR UND BILDERFASSUNGSSYSTEM
CIRCUIT D'ACQUISITION DE PIXEL, CAPTEUR D'IMAGES ET SYSTÈME D'ACQUISITION D'IMAGES

(30) Priority: 08.07.2016 CN 201610537179; 29.11.2016 US 201615364057
(43) Date of publication of application: 10.01.2018
(73) Proprietor: OmniVision Sensor Solution (Shanghai) Co., Ltd, Putuo Dist, Shanghai 200333 (CN)
(72) Inventor: CHEN, Shoushun, 639798 Singapore (SG)
(74) Representative: 2K Patentanwälte Blasberg Kewitz & Reichel

(56) References cited:
- US-A1- 2010 182 468
- US-A1- 2015 365 617
- US-A1- 2016 057 366
- US-A1- 2016 093 273

## Description

### TECHNICAL FIELD

The invention relates to the field of image acquisition techniques, and more particularly relates to a pixel acquisition circuit, an image sensor, and an image acquisition system.

### BACKGROUND

At present, High speed motion cameras have been increasingly used in many fields including industrial monitoring, scientific research and military equipment, etc. The core component of high-speed motion cameras is an image sensor. Usually, the traditional image sensor is an active pixel sensor. This type of sensor requires a certain amount of exposure time to integrate the small photocurrent, and outputs data with the format of image frame in the acquisition order. In order to capture high speed motion, the active pixel sensor have to run at very high frame rate. In additional, users' demand for image resolution is also constantly increasing. This results in that massive quantities of data output by the active pixel sensors. Aside from some useful information, this output data usually contains a very high level of redundancy. The redundant information therein mainly belongs to the static or slow-changing background of the field of view. In other words, a lot of useless background information is constantly sampled, output, and processed. Therefore, traditional image sensors require very high output bandwidth. In addition, the image processing devices will also require high resource consumption when conducting process on the output data subsequently.

US2010182468A1 discloses a method for continuously generating a (grayscale) map of a scene in electronic form, characterized by high time resolution and minimal data volume. The method involves repeated measurement of the instantaneous exposure of the image elements in an image sensor, the start of every exposure measurement being determined autonomously and asynchronously by every image element independently, and hence the redundancy which is typical of synchronous image sensors in the image data to be transmitted being largely suppressed.

US2016057366A1 discloses an imaging device, the device comprising a pixelated array of semiconductor detector elements, in which each detecting element is electrically connected to an integrated circuit, the integrated circuit comprising a passive signal path and an active signal path. The active path provides consecutive frame imaging and the active path detects the location of transient events. The device further comprising a readout decoder block, the readout decoder block controlling operation of the passive paths. Additionally the device comprises of an address arbitration control block, the address arbitration control block controlling operation of the active paths, wherein the address arbitration control block readout of the active paths is independent of readout of the passive paths.

US2015365617 A1 provides according to various embodiments, an image sensor. The image sensor may include: a plurality of pixel cells, each pixel cell configured to convert incident light to an electric signal indicating the intensity of the incident light; a pixel determination circuit configured to determine a pixel cell of the plurality of pixel cells based on light incident to the plurality of pixel cells; and an output circuit configured to output the electrical signal of the determined cell.

US2016093273 discloses a Dynamic Vision Sensor (DVS) where pixel pitch is reduced to increase spatial resolution. The DVS includes shared pixels that employ Time Division Multiplexing (TDM) for higher spatial resolution and better linear separation of pixel data. The pixel array in the DVS may consist of multiple NxN pixel clusters. The NxN pixels in each cluster share the same differentiator and the same comparator using TDM. The pixel pitch is reduced (and, hence, the spatial resolution is improved) by implementing multiple adjacent photodiodes/photoreceptors that share the same differentiator and comparator units using TDM. In the DVS, only one quarter of the whole pixel array may be in use at the same time. A global reset may be done periodically to switch from one quarter of pixels to the other for detection. Because of higher spatial resolution, applications such as gesture recognition or user recognition based on DVS output entail improved performance.

Therefore, the invention proposes a new image acquisition solution.

### SUMMARY

The invention proposes a new technical solution for image acquisition, thus effectively solving at least one of the above-mentioned problems.

The invention provides a pixel acquisition circuit, an image sensor and an image acquisition system as defined in the appended claims.

An image sensor in accordance with the invention can instruct a pixel acquisition circuit array to generate a complete image through a global activation unit. Especially in an application scenario of high-speed photography, the image sensor in accordance with the invention can take clear and lag-free images because it doesn't require extra exposure time. Furthermore, the image sensor in accordance with the invention can make independent determination of illumination through each pixel acquisition circuit (by determining whether the rate and amount of change have reached respective thresholds through a filter-amplifier unit and a threshold comparison unit), and when determining that the illumination meets certain conditions, the image sensor can be activated and output the activation instant in time itself and a first electrical signal corresponding to the light signal of that instant in time. In this way, an image acquisition system in accordance with the invention can obtain a series of pixel points associated with a high-speed moving object, and obtain the accurate motion trajectory and image of the moving object according to these pixel points. In particular, the time information regarding the instant in time when the pixel acquisition circuit is activated is very useful in many application scenarios. For example, it can be used to calculate the speed of moving objects. However, the existing image sensors cannot make accurately acquisition of that time information.

### BRIEF DESCRIPTION OF THE DRAWINGS

In order to accomplish the foregoing and related objects, certain illustrative aspects will be described hereby in connection with the following description and drawings, these aspects indicating the various ways in which the principles disclosed herein can be practiced, and all the aspects and equivalents thereto are intended to fall into the scope of the present disclosure . Through reading the following detailed description in conjunction with the drawings, the foregoing and other objects, features, and advantages of the disclosure will become more apparent. The same parts and elements are generally denoted with the same reference numbers throughout the disclosure.
Fig. 1 shows a schematic diagram of an image acquisition system 100 in accordance with some embodiments of the invention;
Fig. 2 shows a schematic diagram of an image sensor 200 in accordance with some embodiments of the invention;
Fig. 3 shows a schematic diagram of an image acquisition circuit 300 in accordance with some embodiments of the invention;
Figs. 4A, 4B, 4C, and 4D respectively shows a schematic diagram of a photodetector in accordance with an embodiment of the invention;
Fig. 5A and Fig. 5B respectively shows a schematic diagram of a filter-amplifier unit in accordance with an embodiment of the invention;
Figs. 6A, 6B, 6C, and 6D respectively shows a schematic diagram of a threshold comparison unit in accordance with an embodiment of the invention;
Fig. 7A and Fig. 7B respectively shows a schematic diagram of a sample and hold unit in accordance with an embodiment of the invention;
Fig. 8 shows a schematic diagram of an image sensor 800 in accordance with some embodiments of the invention; and
Fig. 9 shows a schematic diagram of a pixel acquisition circuit 900 depicted in Fig. 8.

### DETAILED DESCRIPTION

Exemplary embodiments of the disclosure will now be described in more details in conjunction with the drawings. Although exemplary embodiments of the disclosure are shown in the drawings, it should be understood that the disclosure can be implemented in various ways without being restricted to the embodiments set forth herein. On the contrary, these embodiments are provided for understanding the disclosure more thoroughly, and for being able to fully convey the scope of the disclosure to those skilled in the art.

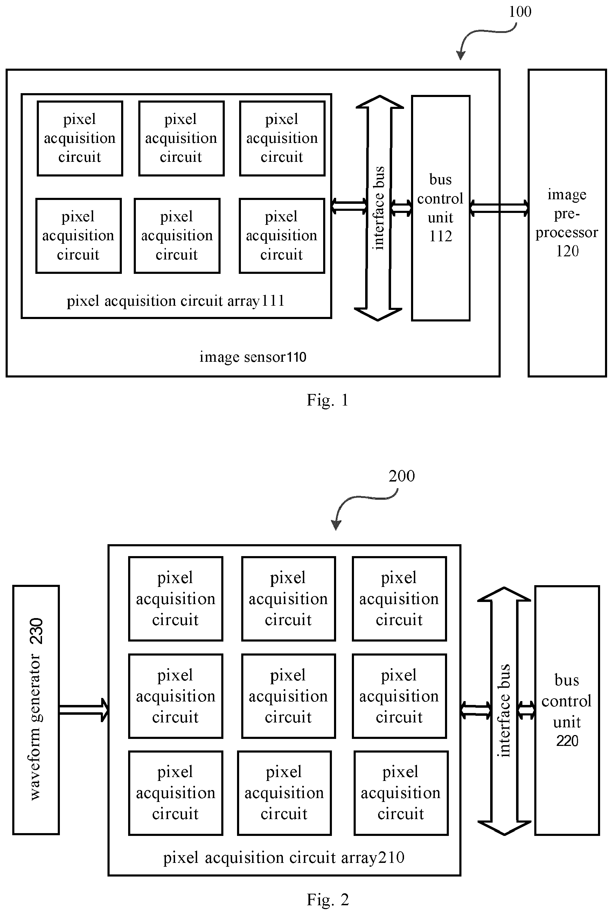

Fig. 1 shows a schematic diagram of an image acquisition system 100 in accordance with some embodiments of the invention. As shown in Fig. 1, the image acquisition system 100 comprises an image sensor 110 and an image pre-processor 120. The image sensor 110 generally comprises an array 111 consisting of a plurality of pixel acquisition circuits and a bus control unit 112. Each of the pixel acquisition circuits in the array 111 is coupled with the bus control unit 112 through an interface bus. In order to conduct trajectory tracking on a moving object (especially a high-speed moving object), that array 111 can monitor the light intensity change (for example, the amount and rate of illuminance change, etc.) caused by the moving object in real time. In particular, each of the pixel acquisition circuits in the array 111 monitors the intensity information of the light illuminating thereon in real time. When one pixel acquisition circuit determines that the change of the light intensity meets predetermined conditions (for example, both the amount and rate of illuminance change exceed thresholds thereof respectively), it can enter into activated state in real time. Here, the pixel acquisition circuit can acquire and buffer a first electrical signal corresponding to the light signal of the instant in time when entering into the activated state and a time signal corresponding to that electrical signal, and send a transmission request to the bus control unit 112 through the interface bus.

Here, the time signal can be a voltage amplitude being read with respect to a periodic waveform signal (for example, a sine wave, a triangular wave, or a sawtooth wave, etc., but not limited thereto) at a certain phase point when the pixel acquisition circuit entering into the activated state. In this way, the bus control unit 112 can obtain the first electrical signal and the time signal from this pixel acquisition circuit through the interface bus. In a typical application scenario, when a moving object passes through the field of view of the image sensor 110, it can cause a change in illumination to at least a part of the pixel acquisition circuits in the array 111. If the change in illumination triggers this part of the pixel acquisition circuits into the activated state, the bus control unit 112 can obtain the first electrical signals and time signals acquired by this part of the pixel acquisition circuits and the addresses of these pixel acquisition circuits in the array and transmit the obtained signals and addresses to the image pre-processor 120. The image pre-processor 120 can be configured to conduct amplification and analog-digital conversion on the obtained first electrical signals in order to obtain digitized pixel points. In this way, the image information and motion trajectory of a moving object can be characterized accurately by a plurality of pixel points and the time signals of each pixel point. The image sensor of the invention will be set forth in more details below in conjunction with Fig. 2.

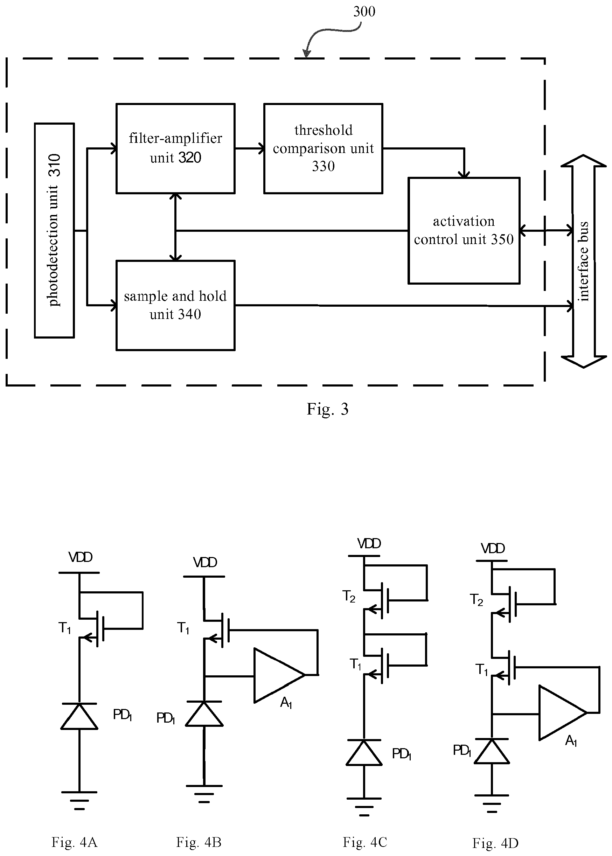

Fig. 2 shows a schematic diagram of an image sensor 200 in accordance with some embodiments of the invention. The image sensor 200 comprises a pixel acquisition circuit array 210, a bus control unit 220, and a waveform generator 230. Therein, the waveform generator 230 can generate a periodic waveform and provide it to the pixel acquisition circuit array 210. The pixel acquisition circuit array 210 generally comprises multiple rows of pixel acquisition circuits. Each row comprises one or more pixel acquisition circuits. Fig. 2 shows the image acquisition circuits with 3^{∗}3 (total of 9) units, but the invention is not limited thereto. The working process of the pixel acquisition circuits in the pixel acquisition circuit array 210 and the communication mechanism with the bus control unit 220 will be set forth in more details below in conjunction with Fig. 3.

Fig. 3 shows a schematic diagram of an image acquisition circuit 300 in accordance with some embodiments of the invention. As shown in Fig. 3, the image acquisition circuit 300 comprises a photodetection unit 310, a filter-amplifier unit 320, a threshold comparison unit 330, a sample and hold circuit 340, and an activation control unit 350.

The photodetection unit 310 outputs a first electrical signal corresponding to the light signal illuminating thereon in real time. Here, the photodetection unit 310 can be but not limited to, for example, a variety of logarithmic photodetectors. Figs. 4A, 4B, 4C, and 4D respectively shows a schematic diagram of a photodetector in accordance with an embodiment of the invention.

In the embodiment shown in Fig. 4A, the photodetector comprises a photodiode PD1 with its anode grounded and a first transistor T1. The first transistor T1 has its source connected with the cathode of the photodiode PD1, and its drain and gate connected to the power supply VDD. In an application scenario, the photodiode PD1 receives an illumination signal, and then produces a current I. On this basis, the change of the voltage generated between the source and gate of T1 has a linear correlation with Inl. In other words, the first electrical signal of the photodetector in this embodiment has a logarithmic relation with the intensity of the illumination light signal.

In the embodiment shown in Fig. 4B, the photodetector comprises a photodiode PD1 with its anode grounded, a first transistor T1, and a first amplifier A1. The first transistor T1 has its source connected with the cathode of the photodiode PD1 and its drain connected with the power supply VDD. The first amplifier A1 is connected between the cathode of the photodiode PD1 and the gate of the first transistor T1. Here, A1 can increase the response speed of the change of the voltage generated between the source and gate of T1. In other words, A1 increases the speed with which the pixel acquisition circuit detects the change of light intensity.

In the embodiment shown in Fig. 4C, the photodetector comprises a photodiode PD1 with its anode grounded and N transistors connected in series. The number N in Fig. 4C is 2, but not limited thereto. Within the N transistors connected in series, the source of the 1st transistor is connected with the cathode of the photodiode PD1. The drain and gate of the ith transistor are connected to the source of the i+1th transistor. The drain and gate of the Nth transistor are connected to the power supply VDD. Therein, N≥2, and the value range of i is [1, N-1]. Here, the N transistors connected in series can increase the current (voltage) gain of the photodetector.

The photodetector shown in Fig. 4D is an improvement based upon the embodiment shown in Fig. 4C. The photodetector shown in Fig. 4D comprises a photodiode PD1 with its anode grounded, N transistors connected in series, and a first amplifier A1. Therein, the source of the 1st transistor is connected with the cathode of the photodiode PD1, and the drain of the 1st transistor is connected to the source of the 2nd transistor. The drain and gate of the ith transistor are connected to the source of the i+1th transistor. The drain and gate of the Nth transistor are connected to the power supply VDD. Therein, N≥2, and the value range of i is [2, N-1]. The first amplifier A1 is connected between the cathode of the photodiode PD1 and the gate of the 1st transistor. Apart from the above-mentioned embodiments of photodetector, the invention can also employ a variety of fast-response photodetectors which will not be elaborated here again.

What needs to be explained is that the traditional photodetection techniques generally require charging a capacitor, and then conducting continuous exposure (continuous discharge of the capacitor), and then determining the accumulated illumination intensity according to the remaining charge of the capacitor. The photodetection unit 310 in accordance with the invention does not require extra exposure time when generating the first electrical signal representing the intensity of the light signal. Therefore, the photodetection unit 310 can output the first electrical signal with no delay. In summary, the pixel acquisition circuit in accordance with the invention can focus on the dynamic component that causes change of light intensity in the field of view, and automatically filter out useless background information. Each pixel acquisition circuit responds to the change of light intensity in real time and has a sub-microsecond response speed. The pixel acquisition circuit in accordance with the invention significantly reduces the amount of output data, so that subsequent devices in the image system can process real-time image data with convenience.

As for the first electrical signal output by the photodetection unit 310 in real time, the sample and hold unit 340 in accordance with the invention has not directly sampled the first electrical signal at any instant in time and transmitted it to the bus control unit through the interface bus before performing a determination operation. In other words, in contrast to traditional image sensors, the pixel acquisition circuit in accordance with the invention first determines whether the illumination signal thereon is associated with high-speed motion by performing a determination operation. When the first electrical signal is associated with high-speed motion, the sample and hold unit 340 can sample and buffer the first electrical signal. In particular, the pixel acquisition circuit 300 can determine whether the first electrical signal is associated with high-speed motion through the filter-amplifier unit 320 and the threshold comparison unit 330.

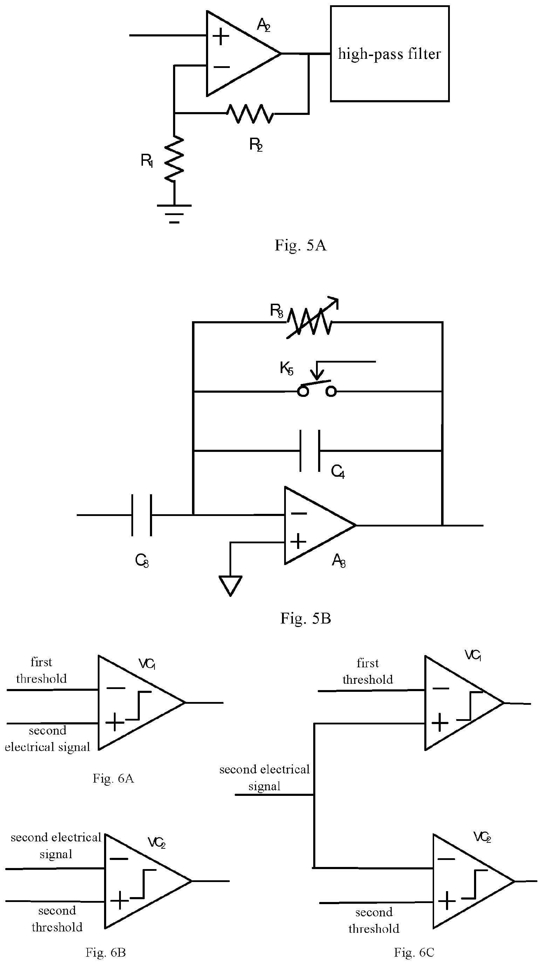

The filter-amplifier unit 320 has its input terminal coupled with the output terminal of the photodetection unit 310, and is operative to perform amplification on the first electrical signal and filter out the signal component below a frequency threshold, so as to output a second electrical signal. Here, the filter-amplifier unit 320 can filter out the signal component corresponding to low-speed motion in the first electrical signal. In other words, the filter-amplifier unit 320 can filter out the signal component corresponding to the illumination with low change rate. The filter-amplifier unit 320 can employ a variety of well-known filtering and amplification techniques but not limited thereto. Fig. 5A and Fig. 5B of the invention respectively shows a schematic diagram of a filter-amplifier unit in accordance with an embodiment.

In the embodiment shown in Fig. 5A, the filter-amplifier unit comprises a second amplifier A2 and a high-pass filter. The second amplifier A2 has its positive input electrode connected with the output terminal of the photodetection unit, and its negative input electrode connected with a first resistor R1 which acts as a pull-down resistor. A second resistor R2 is connected between the output terminal and negative input electrode of the second amplifier A2. The high-pass filter connected with the second amplifier A2 can filter out the signal component below a frequency threshold in the amplified first electrical signal, and output a second electrical signal.

In the embodiment shown in Fig. 5B, the filter-amplifier unit comprises a third capacitor C3, a third amplifier A3, a fourth capacitor C4, an adjustable resistor R3, and a fifth switch K5. The negative input electrode of the third amplifier A3 is connected with the second terminal of the third capacitor C3. The positive input electrode of the third amplifier A3 is connected to a reference potential. That reference potential is generally consistent with the median value of the variation range of the first electrical signal but not limited thereto. The fourth capacitor C4, the adjustable resistor R3, and the fifth switch K5 are all connected in parallel between the negative input electrode and output terminal of the third amplifier A3. In this embodiment, the third capacitor C3 can isolate the direct current component in the first electrical signal. The ratio of the fourth capacitor C4 to the third capacitor C3 is in direct proportion to the gain of the filter-amplifier unit. In addition, the fourth capacitor C4 and the adjustable resistor R3 form a filter. This filter can filter out the signal component below a frequency threshold in the alternating current component of the first electrical signal. Here, the frequency threshold depends upon the resistance value of the adjustable resistor R3. For example, the resistance value of the adjustable resistor R3 can be adjusted through an instruction signal sent by the image acquisition system via the interface bus. That instruction signal can be determined according to user input but not limited thereto.

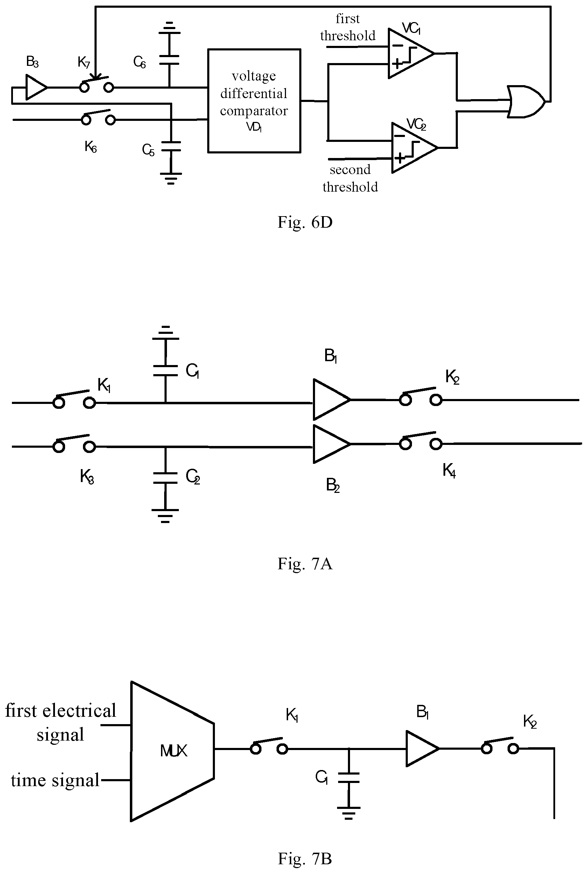

The input terminal of the threshold comparison unit 330 is coupled with the output terminal of the filter-amplifier unit 320. The threshold comparison unit 330 is operative to determine whether the second electrical signal is greater than a first threshold and/or less than a second threshold, and generate an activation instruction signal when the second electrical signal is greater than the first threshold or less than the second threshold. In an embodiment, depending on the desired configuration, the threshold comparison unit 330 can only determine whether the second electrical signal is greater than the first threshold. In another embodiment, the threshold comparison unit 330 is configured to only determine whether the second electrical signal is less than the second threshold. In yet another embodiment, the threshold comparison unit 330 is configured to determine whether the second electrical signal lies within the interval between the second threshold and the first threshold. Therein, the second threshold is less than the first threshold. In this way, the threshold comparison unit 330 in accordance with the invention can detect whether the amount of change of the illumination intensity on the pixel acquisition circuit 300 is significant (the illumination intensity can either increase or decrease). Figs. 6A, 6B, 6C, and 6D respectively shows a schematic diagram of a threshold comparison unit in accordance with an embodiment of the invention.

In the embodiment shown in Fig. 6A, the threshold comparison unit comprises a first voltage comparator VC1. The first voltage comparator VC1 has its inverting input terminal connected with a signal line providing a first threshold, and its non-inverting input terminal connected to the output terminal of the filter-amplifier unit. In this way, the threshold comparison unit of this embodiment can determine whether the second electrical signal is greater than the first threshold.

In the embodiment shown in Fig. 6B, the threshold comparison unit comprises a second voltage comparator VC2. The second voltage comparator VC2 has its non-inverting input terminal connected with a signal line providing a second threshold, and its inverting input terminal connected to the output terminal of the filter-amplifier unit. In this way, the threshold comparison unit of this embodiment can determine whether the second electrical signal is less than the first threshold.

In the embodiment shown in Fig. 6C, the threshold comparison unit comprises a first voltage comparator VC1 and a second voltage comparator VC2. The first voltage comparator VC1 has its inverting input terminal connected with a signal line providing a first threshold, and its non-inverting input terminal connected to the output terminal of the filter-amplifier unit. The second voltage comparator VC2 has its non-inverting input terminal connected with a signal line providing a second threshold, and its inverting input terminal connected to the output terminal of the filter-amplifier unit 320.

In the embodiment shown in Fig. 6D, the threshold comparison unit comprises a voltage differential detector VD1, a fifth capacitor C5, a sixth capacitor C6, a third buffer B3, a seventh switch K7, a first voltage comparator VC1, and a second voltage comparator VC2. The voltage differential detector VD1 has its first input terminal connected with the fifth capacitor C5 which acts as a pull-down capacitor, and its second input terminal connected with the sixth capacitor C6 which also acts as a pull-down capacitor. A sixth switch K6 is arranged between the fifth capacitor C5 and the output terminal of the filter-amplifier unit 320. The third buffer B3 and the seventh switch K7 are connected in series between the fifth capacitor C5 and the sixth capacitor C6. The first voltage comparator VC1 has its inverting input terminal connected with a signal line providing a first threshold, and its non-inverting input terminal connected to the output terminal of the voltage differential detector VD1. The second voltage comparator VC2 has its non-inverting input terminal connected with a signal line providing a second threshold, and its inverting input terminal connected to the output terminal of the voltage differential detector VD1. In this way, the voltage differential detector can compare the second electrical signal at the first input terminal with the signal held at the second input terminal, and output a differential signal. When the differential signal output by the voltage differential detector VD1 is greater than the first threshold or less than the second threshold, the threshold comparison unit outputs an activation instruction signal. What needs to be explained is that the output terminals of VC1 and VC2 are connected to the input terminals of an OR logic unit. When the output terminal of the OR logic unit outputs the activation instruction signal, the threshold comparison unit turns off the sixth switch K6, turns on the seventh switch K7, turns off the seventh switch K7, and turns on the sixth switch K6, successively in time. In this way, the threshold comparison unit can update the signal held at the second input terminal to the second electrical signal currently at the first input terminal.

The sample and hold unit 340 has its input terminal coupled with the output terminal of the photodetection unit 310, and its output terminal coupled with the data bus. Fig. 7A and Fig. 7B respectively shows a schematic diagram of a sample and hold unit in accordance with an embodiment of the invention.

In the embodiment shown in Fig. 7A, the sample and hold unit comprises a first capacitor C1, a second capacitor C2, a first switch K1, a second switch K2, a third switch K3, a fourth switch K4, a first buffer B1, and a second buffer B2. The first terminal of the first capacitor C1 is grounded, and the first switch K1 is connected between the second terminal of the first capacitor C1 and the output terminal of the photodetection unit. The input terminal of the first buffer B1 is connected with the second terminal of the first capacitor C1, and the second switch K2 is connected between the output terminal of the first buffer B1 and the interface bus. The first terminal of the second capacitor C2 is grounded, and the third switch K3 is connected between the second terminal of the second capacitor C2 and the waveform generator. The input terminal of the second buffer B2 is connected with the second terminal of the second capacitor C2, and the fourth switch K4 is connected between the output terminal of the second buffer B2 and the interface bus. It should be noticed that, in other embodiments in accordance with the invention which have no waveform generator configured therein, the third switch K3, the fourth switch K4, and the second buffer B2 can be omitted.

In the embodiment shown in Fig. 7B, the sample and hold unit comprises a data selector MUX, a first switch K1, a second switch K2, a first capacitor C1, and a first buffer B1. The data selector MUX has its first input terminal connected to the output terminal of the photodetection unit, and its second input terminal connected to the time signal line (i.e., connected to the waveform generator 230). The first switch K1 has its first terminal connected with the output terminal of the data selector MUX. The first capacitor C1 has its first terminal grounded, and its second terminal connected with the second terminal of the first switch K1. The first buffer B1 has its input terminal connected with the second terminal of the first capacitor C1. The second switch K2 is connected between the output terminal of the first buffer B1 and the data bus. According to different selections of the data selector MUX, the sample and hold unit can output one of the first electrical signal and the time signal.

In the case of the threshold comparison unit 330 generates an activation instruction signal, upon receiving the activation instruction signal, the activation control unit 350 instructs the sample and hold unit 340 to acquire and buffer the first electrical signal corresponding to the instant in time when the activation instruction signal being received. In addition, the activation control unit 350 sends a transmission request for the buffered first electrical signal to the interface bus.

In addition, in response to receiving a transmission request from at least one pixel acquisition circuit, the bus control unit 220 receives the first electrical signal and/or time signal from that at least one pixel acquisition circuit in turn. Here, the bus control unit 220 can communicate with the pixel acquisition circuit array 210 through a variety of well-known ways of connection.

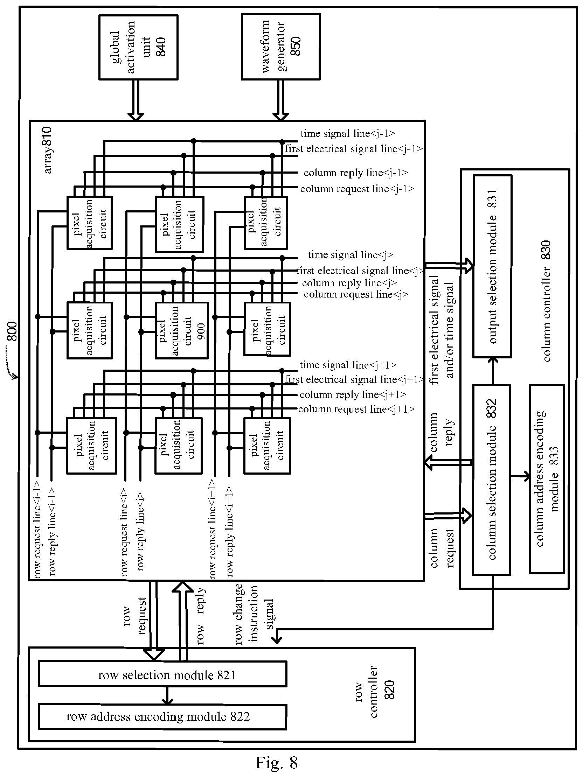

Fig. 8 shows a schematic diagram of an image sensor 800 in accordance with some embodiments of the invention.

As shown in Fig. 8, the image sensor 800 comprises a pixel acquisition circuit array 810, a row controller 820, a column controller 830, a global activation unit 840, and a waveform generator 850. Therein, the row controller 820 and the column controller 830 form a bus control unit. The waveform generator 850 is operative to output a periodic waveform. The global activation unit 840 is operative to generate an activation instruction signal according to user input or a full image acquisition instruction signal of the image acquisition system, and transmit the activation instruction signal to each pixel acquisition circuit. It should be noticed that the global activation unit 840 is not necessary, and can be replaced by other means of providing an activation instruction signal, which are not limited by the invention. Fig. 8 shows a part of the pixel acquisition circuits in the array 810. This part of the pixel acquisition circuits can be divided by row into the i-1th row, the ith row, and the i+1th row (corresponding to row request lines), and can be divided by column into the j-1th column, the jth column, and the j+1th column (corresponding to column request lines), but not limited thereto.

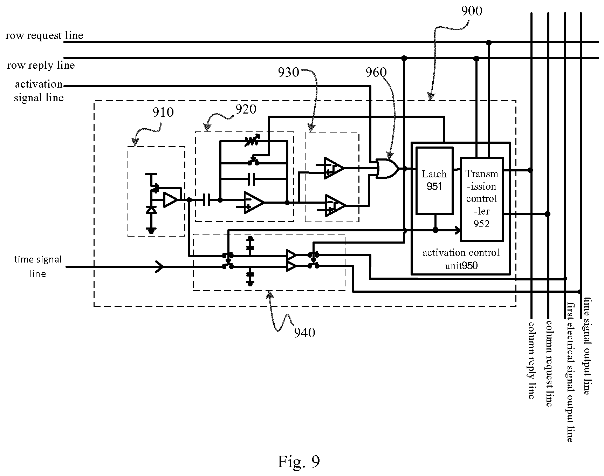

Each row (for example, the ith row in Fig. 8) in the pixel acquisition circuit array 810 is coupled with the row controller 820 through a row request line and a row reply line. Each column in the pixel acquisition array 810 is coupled with the column controller 830 through a column request line, a column reply line, a data line transmitting the first electrical signal, and a data line transmitting the time signal. What needs to be explained is that all of the row request lines, row reply lines, column request lines, and column reply lines are a part of the interface bus of the image sensor 800. The row controller 820 comprises a row selection module 821 and a row address encoding module 822. The column controller 830 comprises an output selection module 831, a column selection module 832, and a column address encoding module 833. Fig. 9 shows a schematic diagram of an pixel acquisition circuit 900 depicted in Fig. 8.

As shown in Fig. 9, the pixel acquisition circuit 900 comprises a photodetection unit 910, a filter-amplifier unit 920, a threshold comparison unit 930, a sample and hold circuit 940, an activation control unit 950, and an OR logic unit 960.

The photodetection unit 910 shown in Fig. 9 is configured as Fig. 4B. The photodetection unit 910 in accordance with the invention can also be configured as any of Figs. 4A, 4C, and 4D, which will not be elaborated here again. The filter-amplifier unit 920 shown in Fig. 9 is configured as Fig. 5B. The filter-amplifier unit 920 can also be configured as Fig. 5A or other well-known implementations, which will not be elaborated here again. The threshold comparison unit 930 shown in Fig. 9 is configured as Fig. 6C. The threshold comparison unit 930 can also be configured as any of Figs. 6A, 6B, and 6D. The sample and hold unit 940 shown in Fig. 9 is configured as Fig. 7A. The sample and hold unit 940 can also be configured as Fig. 7B or other well-known implementations, which will not be elaborated here again.

The OR logic unit 960 has its input terminal coupled with the output terminal of the threshold comparison unit 930 and the global activation unit 840, and its output terminal coupled with the activation control unit 950. What needs to be explained is that In the case of the threshold comparison unit 930 being configured as the implementation of 6D, the OR logic unit in Fig. 6D can be omitted. In other words, the output terminals of VC1 and VC2 in Fig. 6D are directly connected to the input terminal of the OR logic unit 960. When the output terminal of the OR logic unit 960 outputs the activation instruction signal, the threshold comparison unit 930 also turns off the sixth switch K6, turns on the seventh switch K7, turns off the seventh switch K7, and then turns on the sixth switch K6, successively in time.

The activation control unit 950 comprises a latch 951 and a transmission controller 952. The latch 951 is operative to, in response to receiving an activation instruction signal (that is, the activation instruction signal provided by the global activation unit 840 or the threshold comparison unit 930), latch the activated state of that pixel acquisition circuit and generate an acquisition instruction signal, so that the sample and hold unit 940 can acquire and buffer the first electrical signal and time signal of the current instant in time according to that acquisition instruction signal.

In an embodiment, the sample and hold unit 940 is configured as the implementation shown in Fig. 7A. The first switch K1 and the third switch K3 are operative to enter into the off state, so that the sample and hold unit 940 can hold the first electrical signal and time signal of the current instant in time. Here, the current instant in time is the time when the first switch K1 and the third switch K3 turn off. The time difference between the instant in time when the activation instruction signal is received and the current instant in time is small enough to be ignored. In other words, the current instant in time is consistent with the instant in time when the activation instruction signal being received. The transmission controller 952 is operative to send a row selection request to the row controller 820 according to the activation instruction signal. The row selection module 821 in the row controller 820 is operative to receive row selection requests sent by at least one pixel acquisition circuit. The row selection module 821 selects one of the rows, and sends a row reply signal through the row reply line to the pixel acquisition circuit that has sent the row selection request in the selected row. The row address encoding module 822 is operative to generate the row address of the selected row. Upon receiving the row reply signal transmitted by the row controller 820, the transmission controller 952 sends a column selection request to the column controller 830. The column selection module 832 in the column controller 830 is operative to, in response to receiving the column selection request sent by the pixel acquisition circuit that has sent the row selection request in the selected row, in turn select one of the pixel acquisition circuits which corresponds to the column selection request, and send a column reply signal to that selected pixel acquisition circuit through the column reply line, and instruct the output selection module 831 to read the first electrical signal and time signal of the selected pixel acquisition circuit. In addition, the column address encoding module 833 is operative to generate the column address of each pixel acquisition circuit being read. In this way, the image pre-processor can determine the address of the pixel acquisition circuit generating the first electrical signal according to the row address from the row controller 820 and the column address from the column controller 830. After receiving the column reply signal, the transmission controller 952 generates a first reset signal. In this way, the first switch K1 and the third switch K3 enter into the switch-on state according to the first reset signal. The second switch K2 and the fourth switch K4 coupled with the row reply line corresponding to that pixel acquisition circuit 900 stay in switch-on state while there is a row reply signal being transmitted on that row reply signal line, and enter into switch-off state when there is no row reply signal being transmitted.

In another embodiment, the sample and hold circuit 940 is configured as the implementation shown in Fig. 7B. The first switch K1 is operative to enter into the switch-off state according to said acquisition instruction signal, and enter into the switch-on state according to the first reset instruction signal. The second switch K2 is coupled with the row reply bus corresponding to that pixel acquisition circuit. K2 stays in the switch-on state while there is a row reply signal being transmitted on that row reply signal line, and enters into the switch-off state when there is no row reply signal being transmitted.

In addition, when finishing reading data from the pixel acquisition circuit that has sent the row selection request in the selected row, the column controller 830 sends a row change instruction signal to the row controller 820. In this way, the row controller 820 selects another row, and transmits a row reply signal to the pixel acquisition circuit that has sent the row selection request in another row.

In addition, when the filter-amplifier unit 920 is configured as the implementation shown in Fig. 5B, the activation control unit 950 is also operative to output a second reset signal when receiving an activation instruction signal. In this way, the fifth switch K5 in the filter-amplifier unit 920 can enter into switch-on state according to that second reset signal. When the activation control unit 950 receives a column reply signal, the column controller 830 normally has already read the first electrical signal and/or time signal of the sample and hold unit. After receiving the column reply signal, the transmission controller 952 instructs the latch 951 to remove the lock on the activated state (that is, the latch 951 resets), and remove the output of the second reset signal. In this way, the fifth switch K5 enters into the switch-off state, so that the filter-amplifier unit 920 can perform real-time filtering and amplification on the first electrical signal from the photodetection unit 910 continuously. In another embodiment, upon receiving the column reply signal, the activation control unit 950 can also output the second reset signal and then remove the output of the reset signal in turn.

In summary, an image sensor in accordance with the invention can instruct a pixel acquisition circuit array to generate a complete image through a global activation unit. Especially in an application scenario of high-speed photography, the image sensor in accordance with the invention can take clear and lag-free images because it doesn't require extra exposure time. Furthermore, the image sensor in accordance with the invention can make independent determination of illumination through each pixel acquisition circuit (by determining whether the rate and amount of change have reached respective thresholds through a filter-amplifier unit and a threshold comparison unit), and when determining that the illumination meets certain conditions, the image sensor can become activated and output the activation instant in time itself and a first electrical signal corresponding to the light signal of that instant in time. In this way, an image acquisition system in accordance with the invention can obtain a series of pixel points associated with a high-speed moving object, and obtain the accurate motion trajectory and image of the moving object according to these pixel points. In particular, the time information regarding the instant in time when the pixel acquisition circuit being activated is very useful in many application scenarios, for example, it can be used to calculate the speed of the moving object.

The various aspects, embodiments, implementations or features of the described embodiments can be used separately or in any combination. Various aspects of the described embodiments can be implemented by software, hardware or a combination of hardware and software.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not targeted to be exhaustive or to limit the embodiments to the precise forms disclosed. It will be apparent to one of ordinary skill in the art that many modifications and variations are possible in view of the above teachings. The scope of the invention is defined by the appended claims.

## Claims

1. A pixel acquisition circuit (300), comprising:
a photodetection unit (310) operative to output a first electrical signal corresponding to the light signal illuminating thereon in real time;
a filter-amplifier unit (320) with its input terminal coupled with the output terminal of the photodetection unit, and operative to perform amplification on the first electrical signal and filter out the signal component below a frequency threshold on the first electrical signal, so as to output a second electrical signal;
a threshold comparison unit (330) with its input terminal coupled with the output terminal of the filter-amplifier unit (320), and operative to determine whether the second electrical signal is greater than a first threshold, and/or whether the second electrical signal is less than a second threshold which is lower than the first threshold, and generate an activation instruction signal when the second electrical signal is greater than the first threshold or less than the second threshold;
**characterized in that** the pixel acquisition circuit further comprising:
a sample and hold unit (340) with its input terminal coupled with the output terminal of the photodetection unit (310) and its output terminal coupled with the an interface bus of the image sensor;
an activation control unit (350) operative to, in response to receiving an activation instruction signal, instruct the sample and hold unit (340) to acquire and buffer the first electrical signal corresponding to the instant in time when the activation instruction signal being received, and send a transmission request for the buffered first electrical signal to the interface bus.

2. The pixel acquisition circuit as claimed in claim 1, further comprising:
an OR logic unit with its input terminal coupled with the output terminal of said threshold comparison unit (330) and its output terminal coupled with said activation control unit (350); and
an activation signal line coupled at the input terminal of that OR logic unit, and operative to transmit the activation instruction signal not from said pixel acquisition circuit to said OR logic unit.

3. The pixel acquisition circuit as claimed in claim 1, further comprising a time signal line coupled with said sample and hold unit (340) and operative to transmit a periodic signal waveform to the sample and hold circuit;
said sample and hold unit (340) is also operative to acquire and buffer the time signal corresponding to the buffered first electrical signal.

4. The pixel acquisition circuit as claimed in claim 3, wherein, said sample and hold unit (340) comprises:
a first capacitor (C1) with its first terminal grounded, and a first switch (K1) being connected between its second terminal and the output terminal of said photodetection unit (310);
a first buffer (B1) with its input terminal connected with the second terminal of the first capacitor (C1), and a second switch (K2) being connected between its output terminal and said data bus;
a second capacitor (C2) with its first terminal grounded, and a third switch (K3) being connected between its second terminal and said time signal line;
a second buffer (B2) with its input terminal connected with the second terminal of the second capacitor (C2), and a fourth switch (K4) being connected between its output terminal and said interface bus.

5. The pixel acquisition circuit as claimed in claim 3, wherein, said sample and hold unit (340) comprises:
a data selector with its first input terminal connected to the output terminal of said photodetection unit (310) and its second input terminal connected to said time signal line;
a first switch (K1) with its first terminal connected with the output terminal of the data selector;
a first capacitor (C1) with its first terminal grounded and its second terminal connected with the second terminal of the first switch (K1);
a first buffer (B1) with its input terminal connected with the second terminal of the first capacitor (C1);
a second switch (K2) connected between the output terminal of the first buffer (B1) and said interface bus.

6. The pixel acquisition circuit as claimed in claim 3, wherein, said activation control unit (350) comprises:
a latch operative to, in response to receiving an activation instruction signal, output a sample instruction signal, so as for the sample and hold circuit to acquire and buffer the first electrical signal and time signal of the current instant in time according to that sample instruction signal;
a transmission controller operative to send a transmission request for the first electrical signal and time signal buffered by the sample and hold circuit to said interface bus.

7. The pixel acquisition circuit as claimed in claim 3, wherein, said photodetection unit (310) is a logarithmic photodetector.

8. The pixel acquisition circuit as claimed in claim 7, wherein, said photodetector comprises:
a photodiode (PD1) with its anode grounded;
a first transistor (T1) with its source connected with the cathode of the photodiode (PD1) and its drain and gate connected to the power supply VDD.

9. An image sensor (200), comprising:
a pixel acquisition circuit array (210), wherein each pixel acquisition circuit comprises a pixel acquisition circuit as defined in claim 1; and
a bus control unit (220) coupled with the activation control unit and the sample and hold unit of each pixel acquisition circuit through the interface bus, and in response to receiving the transmission request sent by the activation control unit of at least one pixel acquisition circuit, the bus control unit in turn obtains the first electrical signal of each one of that at least one pixel acquisition circuit.

10. The image sensor as claimed in claim 9, further comprising a global activation unit operative to generate an activation instruction signal and send the activation instruction signal to the activation control unit of each pixel acquisition circuit through the activation signal line, so as for the pixel acquisition circuit array to acquire and buffer the first electrical signal simultaneously.

11. The image sensor as claimed in claim 10, wherein, each pixel acquisition circuit further comprises:
an OR logic unit with its input terminal coupled with the output terminal of said threshold comparison unit and its output terminal coupled with said activation control unit, and its input terminal also coupled with said global activation unit.

12. The image sensor as claimed in claim 9, further comprising a waveform generator (230) coupled with the sample and hold unit of each pixel acquisition circuit through a time signal line and operative to output a periodic signal waveform;
said sample and hold unit is also operative to acquire and buffer the time signal corresponding to the buffered first electrical signal.

13. The image sensor as claimed in claim 12, wherein, the activation control unit of each pixel acquisition circuit comprises:
a latch operative to, in response to receiving an activation instruction signal, latch the activated state of that pixel acquisition circuit and generate an acquisition instruction signal, so as for the sample and hold circuit to acquire and buffer the first electrical signal and time signal of the current instant in time according to that acquisition instruction signal;
a transmission controller operative to send a row selection request to said bus control unit according to the acquisition instruction signal, and send a column request signal to said bus control unit upon receiving a row reply signal transmitted by the bus control unit, and generate a first reset signal upon receiving a column reply signal from the bus control unit, so as for said sample and hold circuit to continue acquiring the first electrical signal and time signal according to the first reset signal.

14. The image sensor as claimed in claim 13, wherein, said bus control unit (220) comprises:
a row controller operative to receive the row selection request sent by at least one pixel acquisition circuit, select one of the rows and obtain the row address of that row, and transmit a row reply signal to the pixel acquisition circuit that has sent the row selection request in the selected row;
a column controller operative to, in response to receiving the column selection request sent by the activation control unit of the pixel acquisition circuit that has received the row reply signal in the selected row, in turn obtain the first electrical signal and/or time signal buffered by the pixel acquisition circuit corresponding to each column selection request,
and send a row change instruction signal to the row controller after obtaining the first electrical signals and/or time signals corresponding to all the column selection requests of the selected row, so as for the row controller to select another row and transmit a row reply signal to the pixel acquisition circuit that has sent the row selection request in the selected another row.

15. An image acquisition system (100), comprising:
an image sensor (110) as claimed in claim 14; and
an image pre-processor (120) operative to obtain first electrical signals of at least one pixel acquisition circuit acquired by the image sensor, time signals corresponding to that first electrical signals, and address information, and perform amplification and analog-digital conversion on the obtained first electrical signals and time signals of each pixel acquisition circuit.

## Patentansprüche

1. Eine Pixelerfassungsschaltung (300), umfassend:
eine Fotodetektionseinheit (310), die so funktioniert, dass sie ein erstes elektrisches Signal ausgibt, das dem darauf leuchtenden Lichtsignal in Echtzeit entspricht;
eine Filter-Verstärker-Einheit (320), deren Eingangsanschluss mit dem Ausgangsanschluss der Fotodetektionseinheit gekoppelt ist und die dazu dient, eine Verstärkung des ersten elektrischen Signals durchzuführen und die Signalkomponente unterhalb eines Frequenzschwellenwertes aus dem ersten elektrischen Signal herauszufiltern, um ein zweites elektrisches Signal auszugeben;
eine Schwellenwert-Vergleichseinheit (330), deren Eingangsanschluss mit dem Ausgangsanschluss der Filter-Verstärker-Einheit (320) gekoppelt ist und die dazu dient, zu bestimmen, ob das zweite elektrische Signal größer als ein erster Schwellenwert ist und/oder ob das zweite elektrische Signal kleiner als ein zweiter Schwellenwert ist, der niedriger als der erste Schwellenwert ist, und ein Aktivierungsanweisungssignal zu erzeugen, wenn das zweite elektrische Signal größer als der erste Schwellenwert oder kleiner als der zweite Schwellenwert ist;
**dadurch gekennzeichnet, dass** die Pixelerfassungsschaltung weiterhin umfasst:
eine Abtast- und Halteeinheit (340), deren Eingangsanschluss mit dem Ausgangsanschluss der Fotodetektionseinheit (310) und deren Ausgangsanschluss mit dem Schnittstellenbus des Bildsensors gekoppelt ist;
eine Aktivierungssteuereinheit (350), die als Reaktion auf den Empfang eines Aktivierungsbefehlssignals die Abtast- und Halteeinheit (340) anweist, das erste elektrische Signal, das dem Zeitpunkt des Empfangs des Aktivierungsbefehlssignals entspricht, zu erfassen und zu puffern, und eine Übertragungsanforderung für das gepufferte erste elektrische Signal an den Schnittstellenbus zu senden.

2. Pixelerfassungsschaltung nach Anspruch 1, ferner umfassend:
eine ODER-Logikeinheit, deren Eingangsanschluss mit dem Ausgangsanschluss der Schwellenwert-Vergleichseinheit (330) und deren Ausgangsanschluss mit der Aktivierungssteuereinheit (350) gekoppelt ist; und
eine Aktivierungssignalleitung, die mit dem Eingangsanschluss dieser ODER-Logikeinheit verbunden ist und dazu dient, das Aktivierungsbefehlssignal nicht von der Pixelerfassungsschaltung an die ODER-Logikeinheit zu übertragen.

3. Die Pixelerfassungsschaltung nach Anspruch 1, ferner umfassend eine Zeitsignalleitung, die mit der Abtast- und Halteeinheit (340) gekoppelt ist und dazu dient, eine periodische Signalwellenform an die Abtast- und Halteschaltung zu übertragen;
wobei die Abtast- und Halteeinheit (340) auch dazu dient, das Zeitsignal zu erfassen und dem gepufferten ersten elektrischen Signal entsprechend zu puffern.

4. Pixelerfassungsschaltung nach Anspruch 3, wobei die Abtast- und Halteeinheit (340) umfasst:
einen ersten Kondensator (C1), dessen erster Anschluss geerdet ist, und einen ersten Schalter (K1), der zwischen seinem zweiten Anschluss und dem Ausgangsanschluss der Fotodetektionseinheit (310) angeschlossen ist;
einen ersten Puffer (B1), dessen Eingangsanschluss mit dem zweiten Anschluss des ersten Kondensators (C1) verbunden ist, und einen zweiten Schalter (K2), der zwischen seinem Ausgangsanschluss und dem Datenbus angeschlossen ist;
einen zweiten Kondensator (C2), dessen erster Anschluss geerdet ist, und einen dritten Schalter (K3), der zwischen seinem zweiten Anschluss und der Zeitsignalleitung angeschlossen ist;
einen zweiten Puffer (B2), dessen Eingangsanschluss mit dem zweiten Anschluss des zweiten Kondensators (C2) verbunden ist, und einen vierten Schalter (K4), der zwischen seinem Ausgangsanschluss und dem Schnittstellenbus angeschlossen ist.

5. Pixelerfassungsschaltung nach Anspruch 3, wobei die Abtast- und Halteeinheit (340) umfasst:
einen Datenwähler, dessen erster Eingangsanschluss mit dem Ausgangsanschluss der Fotodetektionseinheit (310) und dessen zweiter Eingangsanschluss mit der Zeitsignalleitung verbunden ist;
einen ersten Schalter (K1), dessen erste Klemme mit der Ausgangsklemme des Datenwählers verbunden ist;
einen ersten Kondensator (C1), dessen erster Anschluss geerdet und dessen zweiter Anschluss mit dem zweiten Anschluss des ersten Schalters (K1) verbunden ist;
einen ersten Puffer (B1), dessen Eingangsanschluss mit dem zweiten Anschluss des ersten Kondensators (C1) verbunden ist;
einen zweiten Schalter (K2), der zwischen dem Ausgangsanschluss des ersten Puffers (B1) und dem Schnittstellenbus angeschlossen ist.

6. Pixelerfassungsschaltung nach Anspruch 3, wobei die Aktivierungssteuereinheit (350) umfasst:
einen Zwischenspeicher, der als Reaktion auf den Empfang eines Aktivierungsbefehlssignals ein Abtastbefehlssignal ausgibt, so dass die Abtast- und Halteschaltung das erste elektrische Signal und das Zeitsignal des aktuellen Zeitpunkts gemäß diesem Abtastbefehlssignal erfasst und puffert;
eine Übertragungssteuerung, die eine Übertragungsanforderung für das erste elektrische Signal und das Zeitsignal, die von der Abtast- und Halteschaltung gepuffert werden, an den Schnittstellenbus sendet.

7. Pixelerfassungsschaltung nach Anspruch 3, wobei die Photodetektionseinheit (310) ein logarithmischer Photodetektor ist.

8. Pixelerfassungsschaltung nach Anspruch 7, wobei der Fotodetektor umfasst:
eine Fotodiode (PD1), deren Anode geerdet ist;
einen ersten Transistor (T1), dessen Source mit der Kathode der Fotodiode (PD1) verbunden ist und dessen Drain und Gate mit der Stromversorgung VDD verbunden sind.

9. Ein Bildsensor (200), umfassend:
eine Pixelerfassungsschaltungsanordnung (210), wobei jede Pixelerfassungsschaltung eine Pixelerfassungsschaltung gemäß Anspruch 1 umfasst; und
eine Bussteuereinheit (220), die mit der Aktivierungssteuereinheit und der Abtast- und Halteeinheit jeder Pixelerfassungsschaltung über den Schnittstellenbus gekoppelt ist, und als Reaktion auf den Empfang der Übertragungsanforderung, die von der Aktivierungssteuereinheit mindestens einer Pixelerfassungsschaltung gesendet wird, die Bussteuereinheit ihrerseits das erste elektrische Signal jeder dieser mindestens einen Pixelerfassungsschaltung erhält.

10. Bildsensor nach Anspruch 9, der ferner eine globale Aktivierungseinheit umfasst, die ein Aktivierungsbefehlssignal erzeugt und das Aktivierungsbefehlssignal über die Aktivierungssignalleitung an die Aktivierungssteuereinheit jeder Pixelerfassungsschaltung sendet, so dass die Pixelerfassungsschaltungsanordnung das erste elektrische Signal gleichzeitig erfasst und puffert.

11. Bildsensor nach Anspruch 10, wobei jede Pixelerfassungsschaltung weiterhin umfasst:
eine ODER-Logikeinheit, deren Eingangsanschluss mit dem Ausgangsanschluss der Schwellenwert-Vergleichseinheit gekoppelt ist und deren Ausgangsanschluss mit der Aktivierungssteuereinheit gekoppelt ist, und deren Eingangsanschluss auch mit der globalen Aktivierungseinheit gekoppelt ist.

12. Bildsensor nach Anspruch 9, der ferner einen Wellenformgenerator (230) umfasst, der mit der Abtast- und Halteeinheit jeder Pixelerfassungsschaltung über eine Zeitsignalleitung verbunden ist und eine periodische Signalwellenform ausgibt;
wobei die Abtast- und Halteeinheit auch dazu dient, das Zeitsignal zu erfassen und zu puffern, das dem gepufferten ersten elektrischen Signal entspricht.

13. Bildsensor nach Anspruch 12, wobei die Aktivierungssteuereinheit jeder Pixelerfassungsschaltung umfasst:
einen Zwischenspeicher, der in der Lage ist, als Reaktion auf den Empfang eines Aktivierungsbefehlssignals den aktivierten Zustand dieser Pixelerfassungsschaltung zu sperren und ein Erfassungsbefehlssignal zu erzeugen, so dass die Abtast- und Halteschaltung das erste elektrische Signal und das Zeitsignal des aktuellen Zeitpunkts gemäß diesem Erfassungsbefehlssignal erfasst und puffert;
eine Übertragungssteuerung, die so funktioniert, dass sie eine Zeilenauswahlanforderung an die Bussteuereinheit gemäß dem Erfassungsanweisungssignal sendet und ein Spaltenanforderungssignal an die Bussteuereinheit sendet, wenn sie ein von der Bussteuereinheit gesendetes Zeilenantwortsignal empfängt, und ein erstes Rücksetzsignal erzeugt, wenn sie ein Spaltenantwortsignal von der Bussteuereinheit empfängt, damit die Abtast- und Halteschaltung die Erfassung des ersten elektrischen Signals und des Zeitsignals gemäß dem ersten Rücksetzsignal fortsetzt.

14. Bildsensor nach Anspruch 13, wobei die Bus-Steuereinheit (220) umfasst:
eine Zeilensteuerung, die die von mindestens einer Pixelerfassungsschaltung gesendete Zeilenauswahlanforderung empfängt, eine der Zeilen auswählt und die Zeilenadresse dieser Zeile erhält und ein Zeilenantwortsignal an die Pixelerfassungsschaltung sendet, die die Zeilenauswahlanforderung in der ausgewählten Zeile gesendet hat;
eine Spaltensteuerung, die als Reaktion auf den Empfang der von der Aktivierungssteuereinheit der Pixelerfassungsschaltung, die das Zeilenantwortsignal in der ausgewählten Zeile empfangen hat, gesendeten Spaltenauswahlanforderung ihrerseits das erste elektrische Signal und/oder das von der Pixelerfassungsschaltung gepufferte Zeitsignal entsprechend jeder Spaltenauswahlanforderung erhält,
und nach Erhalt der ersten elektrischen Signale und/oder Zeitsignale, die allen Spaltenauswahlanforderungen der ausgewählten Reihe entsprechen, ein Reihenänderungsbefehlssignal an die Reihensteuereinheit senden, damit die Reihensteuereinheit eine andere Reihe auswählt und ein Reihenantwortsignal an die Pixelerfassungsschaltung sendet, die die Reihenauswahlanforderung in der ausgewählten anderen Reihe gesendet hat.

15. Bilderfassungssystem (100), umfassed:
einen Bildsensor (110) nach Anspruch 14; und
einen Bildvorprozessor (120), der so funktioniert, dass er erste elektrische Signale von mindestens einer durch den Bildsensor erfassten Pixelerfassungsschaltung, diesen ersten elektrischen Signalen entsprechende Zeitsignale und Adressinformationen erhält und eine Verstärkung und Analog-Digital-Wandlung der erhaltenen ersten elektrischen Signalen und Zeitsignalen jeder Pixelerfassungsschaltung durchführt.

## Revendications

1. Un circuit d'acquisition de pixels (300), comprenant :
une unité de photodétection (310) fonctionnant pour sortir un premier signal électrique correspondant au signal lumineux l'illuminant en temps réel ;
une unité de filtre-amplificateur (320) dont le terminal d'entrée est couplé au terminal de sortie de l'unité de photodétection, et fonctionnant pour effectuer une amplification sur le premier signal électrique et éliminer par filtrage la composante de signal en dessous d'un seuil de fréquence sur le premier signal électrique, de manière à délivrer un second signal électrique ;
une unité de comparaison de seuil (330) avec son terminal d'entrée couplé au terminal de sortie de l'unité de filtre-amplificateur (320), et fonctionnant pour déterminer si le second signal électrique est supérieur à un premier seuil, et/ou si le second signal électrique est inférieur à un second seuil qui est inférieur au premier seuil, et générer un signal d'instruction d'activation lorsque le second signal électrique est supérieur au premier seuil ou inférieur au second seuil ;
**caractérisé en ce que** le circuit d'acquisition de pixels comprend en outre :
une unité d'échantillonnage et de blocage (340) le terminal d'entrée est couplé au terminal de sortie de l'unité de photodétection (310) et dont le terminal de sortie est couplé à un bus d'interface du capteur d'image ;
une unité de commande d'activation (350) fonctionnant pour, en réponse à la réception d'un signal d'instruction d'activation, ordonner à l'unité d'échantillonnage et de blocage (340) d'acquérir et de mettre en mémoire tampon le premier signal électrique correspondant à l'instant où le signal d'instruction d'activation est reçu, et envoyer une demande de transmission pour le premier signal électrique mis en mémoire tampon au bus d'interface.

2. Le circuit d'acquisition de pixels selon la revendication 1, comprenant en outre :
une unité OR logique dont le terminal d'entrée est couplé au terminal de sortie de ladite unité de comparaison de seuil (330) et dont le terminal de sortie est couplé à ladite unité de commande d'activation (350) ; et
une ligne de signal d'activation couplée au terminal d'entrée de cette unité OR logique, et fonctionnant pour transmettre le signal d'instruction d'activation ne provenant pas dudit circuit d'acquisition de pixels à ladite unité OR logique.

3. Circuit d'acquisition de pixels selon la revendication 1, comprenant en outre une ligne de signal temporel couplée à ladite unité d'échantillonnage et de blocage (340) et fonctionnant pour transmettre une forme d'onde de signal périodique au circuit d'échantillonnage et de blocage ;
ladite unité d'échantillonnage et de blocage (340) est également opérationnelle pour acquérir et mettre en mémoire tampon le signal temporel correspondant au premier signal électrique mis en mémoire tampon.

4. Circuit d'acquisition de pixels selon la revendication 3, dans lequel, ladite unité d'échantillonnage et de blocage (340) comprend :
un premier condensateur (C1) avec son premier terminal mis à la terre, et un premier commutateur (K1) étant connecté entre son second terminal et le terminal de sortie de ladite unité de photodétection (310) ;
un premier tampon (B1) dont le terminal d'entrée est connecté à la seconde borne du premier condensateur (C1), et un second commutateur (K2) étant connecté entre son terminal de sortie et ledit bus de données ;
un deuxième condensateur (C2) dont le premier terminal est mis à la terre, et un troisième commutateur (K3) étant connecté entre son deuxième terminal et ladite ligne de signal temporel ;
un deuxième tampon (B2) dont le terminal d'entrée est connecté au deuxième terminal du deuxième condensateur (C2), et un quatrième commutateur (K4) étant connecté entre son terminal de sortie et ledit bus d'interface.

5. Circuit d'acquisition de pixels selon la revendication 3, dans lequel, ladite unité d'échantillonnage et de blocage (340) comprend :
un sélecteur de données dont le premier terminal d'entrée est connecté au terminal de sortie de ladite unité de photodétection (310) et dont le second terminal d'entrée est connecté à ladite ligne de signal temporel ;
un premier commutateur (K1) dont le premier terminal est relié au terminal de sortie du sélecteur de données;
un premier condensateur (C1) dont le premier terminal est mis à la terre et dont le second terminal est connecté au second terminal du premier commutateur (K1) ;
un premier tampon (B1) dont le terminal d'entrée est connecté au second terminal du premier condensateur (C1) ;
un second commutateur (K2) connecté entre le terminal de sortie du premier tampon (B1) et ledit bus d'interface.

6. Circuit d'acquisition de pixels selon la revendication 3, dans lequel, ladite unité de commande d'activation (350) comprend :
un verrou fonctionnant pour, en réponse à la réception d'un signal d'instruction d'activation, sortir un signal d'instruction d'échantillon, de façon à ce que le circuit d'échantillonnage et de blocage acquière et mette en mémoire tampon le premier signal électrique et le signal de temps de l'instant courant dans le temps selon ce signal d'instruction d'échantillon ;
un contrôleur de transmission fonctionnant pour envoyer une demande de transmission pour le premier signal électrique et le signal de temps tamponnés par le circuit d'échantillonnage et de blocage audit bus d'interface.

7. Circuit d'acquisition de pixels selon la revendication 3, dans lequel ladite unité de photodétection (310) est un photodétecteur logarithmique.

8. Circuit d'acquisition de pixels selon la revendication 7, dans lequel, ledit photodétecteur comprend :
une photodiode (PD1) dont l'anode est mise à la terre ;
un premier transistor (T1) dont la source est connectée à la cathode de la photodiode (PD1) et dont le drain et la grille sont connectés à l'alimentation électrique VDD.

9. Capteur d'image (200), comprenant :
un réseau de circuit d'acquisition de pixels (210), dans lequel chaque circuit d'acquisition de pixels comprend un circuit d'acquisition de pixels tel que défini dans la revendication 1 ; et
une unité de commande de bus (220) couplée à l'unité de commande d'activation et à l'unité d'échantillonnage et de blocage de chaque circuit d'acquisition de pixels par le biais du bus d'interface, et en réponse à la réception de la demande de transmission envoyée par l'unité de commande d'activation d'au moins un circuit d'acquisition de pixels, l'unité de commande de bus obtient à son tour le premier signal électrique de chacun de cet au moins un circuit d'acquisition de pixels.

10. Capteur d'images selon la revendication 9, comprenant en outre une unité d'activation globale fonctionnant pour générer un signal d'instruction d'activation et envoyer le signal d'instruction d'activation à l'unité de commande d'activation de chaque circuit d'acquisition de pixels par l'intermédiaire de la ligne de signal d'activation, de façon à ce que la matrice de circuit d'acquisition de pixels acquière et mette en tampon le premier signal électrique simultanément.

11. Capteur d'image selon la revendication 10, dans lequel, chaque circuit d'acquisition de pixels comprend en outre :
une unité OR logique dont le terminal d'entrée est couplé au terminal de sortie de ladite unité de comparaison de seuil et dont le terminal de sortie est couplé à ladite unité de commande d'activation, et dont le terminal d'entrée est également couplé à ladite unité d'activation globale.

12. Capteur d'image selon la revendication 9, comprenant en outre un générateur de forme d'onde (230) couplé à l'unité d'échantillonnage et de blocage de chaque circuit d'acquisition de pixels par l'intermédiaire d'une ligne de signal temporel et fonctionnant pour sortir une forme d'onde de signal périodique ;
ladite unité d'échantillonnage et de blocage est également opérationnelle pour acquérir et mettre en mémoire tampon le signal temporel correspondant au premier signal électrique mis en mémoire tampon.

13. Capteur d'image selon la revendication 12, dans lequel, l'unité de commande d'activation de chaque circuit d'acquisition de pixels comprend :
un verrou fonctionnant pour, en réponse à la réception d'un signal d'instruction d'activation, verrouiller l'état activé de ce circuit d'acquisition de pixels et générer un signal d'instruction d'acquisition, de façon à ce que le circuit d'échantillonnage et de blocage acquière et mette en mémoire tampon le premier signal électrique et le signal de temps de l'instant courant dans le temps selon ce signal d'instruction d'acquisition ;
un contrôleur de transmission fonctionnant pour envoyer une demande de sélection de rangée à ladite unité de commande de bus selon le signal d'instruction d'acquisition, et envoyer un signal de demande de colonne à ladite unité de commande de bus lors de la réception d'un signal de réponse de rangée transmis par l'unité de commande de bus, et générer un premier signal de réinitialisation lors de la réception d'un signal de réponse de colonne provenant de l'unité de commande de bus, de façon à ce que ledit circuit d'échantillonnage et de blocage continue à acquérir le premier signal électrique et le signal de temps selon le premier signal de réinitialisation.

14. Capteur d'image selon la revendication 13, dans lequel, ladite unité de commande de bus (220) comprend :
un contrôleur de rangée fonctionnant pour recevoir la demande de sélection de rangée envoyée par au moins un circuit d'acquisition de pixels, sélectionner une des rangées et obtenir l'adresse de rangée de cette rangée, et transmettre un signal de réponse de rangée au circuit d'acquisition de pixels qui a envoyé la demande de sélection de rangée dans la rangée sélectionnée ;
un contrôleur de colonne opérationnel pour, en réponse à la réception de la demande de sélection de colonne envoyée par l'unité de commande d'activation du circuit d'acquisition de pixels qui a reçu le signal de réponse de rangée dans la rangée sélectionnée, obtenir à son tour le premier signal électrique et/ou le signal temporel mis en mémoire tampon par le circuit d'acquisition de pixels correspondant à chaque demande de sélection de colonne,
et envoyer un signal d'instruction de changement de rangée au contrôleur de rangée après avoir obtenu les premiers signaux électriques et/ou signaux temporels correspondant à toutes les demandes de sélection de colonne de la rangée sélectionnée, afin que le contrôleur de rangée sélectionne une autre rangée et transmette un signal de réponse de rangée au circuit d'acquisition de pixels qui a envoyé la demande de sélection de rangée dans l'autre rangée sélectionnée.

15. Système d'acquisition d'images (100), comprenant :
un capteur d'image (110) tel que revendiqué dans la revendication 14 ; et
un pré-processeur d'image (120) fonctionnant pour obtenir des premiers signaux électriques d'au moins un circuit d'acquisition de pixels acquis par le capteur d'image, des signaux de temps correspondant à ces premiers signaux électriques, et des informations d'adresse, et effectuer une amplification et une conversion analogique-numérique sur les premiers signaux électriques et les signaux de temps obtenus de chaque circuit d'acquisition de pixels.
